# FASCICULE DE BREVET EUROPEEN

(11) **EP 1 406 849 B1**
(45) Date de publication et mention de la délivrance du brevet: **29.08.2007**
(21) Numéro de dépôt: 02745545.0
(22) Date de dépôt: 19.06.2002
(51) Int. Cl.: C04B 28/10, C04B 18/24, C04B 38/00

(54) **BETONS ET MORTIERS DE CHANVRE, LEUR PROCEDE DE PREPARATION, ET LEURS APPLICATIONS**
HANFBETONE UND -MÖRTEL, VEFAHREN ZU IHRER HERSTELLUNG UND IHRE VERWENDUNG
HEMP CONCRETE MIXTURES AND MORTARS, PREPARATION METHOD AND USES

(30) Priorité: 21.06.2001 FR 0108437
(43) Date de publication de la demande: 14.04.2004
(73) Titulaire: BCB, 25870 Châtillon Le Duc (FR)
(72) Inventeur: RIZZA, Michel, F-94170 Le Perreux-sur-Marne (FR)
(74) Mandataire: Richebourg, Michel François
(86) Numéro de dépôt international: PCT/FR2002/002123
(87) Numéro de publication internationale: WO 2003/004435

## Description

### Secteur technique de l'invention :

La présente invention concerne le secteur technique des bétons et mortiers dits « de chanvre » c'est-à-dire contenant de l' « ana » de chanvre ou chènevotte et / ou d'autres composants du chanvre, comme les fibres, fibrilles, poussières, poudre de chanvre, ci-après « composants ».

Ces mortiers et bétons sont destinés à toutes les applications BTP (Bâtiment et Travaux Publics) ainsi qu'à toutes les applications domestiques ou autres, habituelles, des bétons et mortiers.

On rappelle qu'un mortier est constitué par un mélange de liant comme la chaux, le ciment ou analogue, et d'agrégats(s) comme le sable, une poudre de pierre, du marbre concassé et analogues, avec de l'eau , un tet mortier est utilisé en construction pour lier et / ou pour recouvrir les éléments de construction.

On rappelle qu'un béton est un agglomérat artificiel de cailloux, gravier et sable, réunis entre eux au moyen d'un liant aqueux ou non.

### Problème technique posé :

L'incorporation de dérivés du chanvre dans un béton ou mortier pose un problème très sérieux du fait du caractère fortement hydrophile du composant « chanvre ». Celui-ci peut absorber jusqu'à environ 400 % de son poids d'eau ou de liquide à base aqueuse, ce qui introduit une très forte réaction concurrente avec l'eau contenue dans le mortier ou béton.

Comme on le verra ci-dessous, on a tenté dans l'art antérieur diverses techniques pour pailler cet inconvénient grave, mais on n'est pas parvenu à empêcher que les bétons et mortiers obtenus présentent des caractéristiques de séchage, de prise, et de propriétés mécaniques gravement aléatoires, ce qui n'est pas acceptable dans un tel domaine, ces Inconvénients pouvant comporter: difficultés de prise, prise « cassée » éventuellement, absence de séchage du béton, ou séchage aléatoire, et / ou propriétés mécaniques mauvaises ou aléatoires, et / ou risque de reprise d'eau d'origine externe (eau de pluie par exemple) avec développement de microorganismes, moisissures, fragilisation au gel, etc....

### Art antérieur:

On connaît depuis très longtemps, et même depuis les temps anciens, des mortiers ou bétons de chanvre, où le composant de chanvre (notamment la « filasse ») est employé comme agrégat, en totalité ou en partie, dans les préparations. De même, l'outillage de préparation est connu universellement, ainsi que les fournisseurs des produits actuels et les familles de produits les plus modernes.

Les liants utilisés sont couramment le plâtre, la chaux (employée alors comme liant hydraulique) et les ciments, c'est-à-dire des liants hydrauliques.

L'intérêt de ces produits réside dans une très bonne Isolation thermique et acoustique, alliée à une très bonne résistance mécanique comportant une composante intéressante en matière de résistance à la compression et de retour en élasticité, ce qui en fait un très bon produit adapté aux normes sismiques.

Ces produits sont utilisés en briques de chanvre, en dalles, murs, blocs, de bétons et mortiers plus ou moins légers, dans toutes les applications BTP et domestiques.

Cependant, ils présentent de graves défauts qu'une grande partie de l'industrie considérée, malgré tous ses efforts, n'est pas parvenue à surmonter; l'industrie considérée s'est alors accommodée des inconvénients bien connus et pourtant sérieux, comme le défaut de séchage et défauts analogues.

Il existe donc un besoin important et reconnu pour des bétons et mortiers de chanvre ne comportant plus ces défauts importants voire graves ou même rédhibitoires, tout en conservant leurs excellentes autres propriétés.

Un besoin particulier existe pour la rénovation ou réhabilitation des ouvrages historiques et bâtiments anciens, domaine dans lequel les bétons et mortiers à liant hydraulique conduisent à des défaillances.

### Résumé de l'invention :

L'invention concerne des mortiers ou bétons de chanvre, c'est-à-dire comportant un ou plusieurs composante du chanvre dans leur formulation, dans lesquels le liant est au moins en partie constitué par de la chaux dite « aérienne », notamment la chaux calcique.

Comme on le sait, la chaux aérienne est un liant qui fait sa prise à l'air par captation du gaz carbonique CO2 après réduction dans une phase aqueuse, et la chaux calcique est un liant qui contient essentiellement de l'hydroxyde de calcium, la chaux dolomitique contenant un mélange d'hydroxyde de calcium et d'hydroxyde de magnésium.

La chaux aérienne pourra être utilisée sous diverses formes comme une pâte, une poudre ou, pour la chaux vive, la roche elle-même.

On pourra utiliser des mélanges quelconques de tous les types et de toutes les formes de chaux aérienne.

L'homme de métier saura envisager et adapter ces combinaisons diverses, en fonction de l'application spécifique envisagée, de ses connaissances générales, de la présente description et éventuellement de quelques essais simples de routine.

Selon un mode de réalisation préféré, ledit liant est constitué de 20 à 90 % en poids, de préférence de 50 à 80 % en poids, de chaux aérienne, et de 10 à 70 % en poids, de préférence 20 à 40 % en poids de liant hydraulique comme une chaux hydraulique ou un ciment, et éventuellement 5 à 10 % en poids de liant et / ou de charge(s) pouzzolaniques de type cendres volcaniques, « trass » (qui est une roche volcanique bien connue de l'homme de métier), ou tout autre composant à caractère pouzzolanique, le total étant égal à 100 %.

Par rapport aux liants habituels, plâtre et ciments utilisés depuis des décennies, la chaux présente des particularités et des contraintes tout à fait notables et spécifiques.

Tout d'abord, les particules de chaux sont très fines, et conduisent à une surface spécifique Blaine très supérieure à celle des liants hydrauliques.

On indiquera, bien que cela soit connu de l'homme de métier, que la surface spécifique Blaine de la chaux est de l'ordre de 8000 à 20 000, tandis que celle des liants hydrauliques est de l'ordre de 2700 à 5000.

Ensuite, ses caractéristiques de prise sont radicalement différentes : alors que les ciments et les plâtres contiennent des silicates, des aluminates et /ou des sulfates, qui interviennent dans la prise par un phénomène de cristallisation, la chaux intervient dans la prise par une réaction de recarbonatation où l'hydroxyde de calcium subit une série de réductions avec l'eau ou le fluide à base aqueuse du béton ou mortier. Dans le cas de la chaux, l'eau internent comme simple vecteur du CO2 nécessaire.

De plus, sa solubilité dans l'eau est seulement de 1,7 g/l à 10 - 20 °C.

Un problème particulier, lié à l'emploi de la chaux, et qui était prévisible, du fait de la difficulté de bien gérer l'eau de la formulation, ce qui a sans doute dissuadé son emploi dans l'art antérieur, était la difficulté d'obtenir un comportement homogène et notamment une bonne rhéologie.

Un autre préjugé qui s'opposait à l'emploi de la chaux aérienne résidait dans le fait de penser que la chaux aérienne ne pouvait fonctionner, dans un béton ou mortier, qu'au voisinage de l'air, par définition, c'est-à-dire en surface ou sur des profondeurs maxima de l'ordre de 1 à 3 cm. Or, invention propose une solution qui, contre toute attente, élimine ce problème.

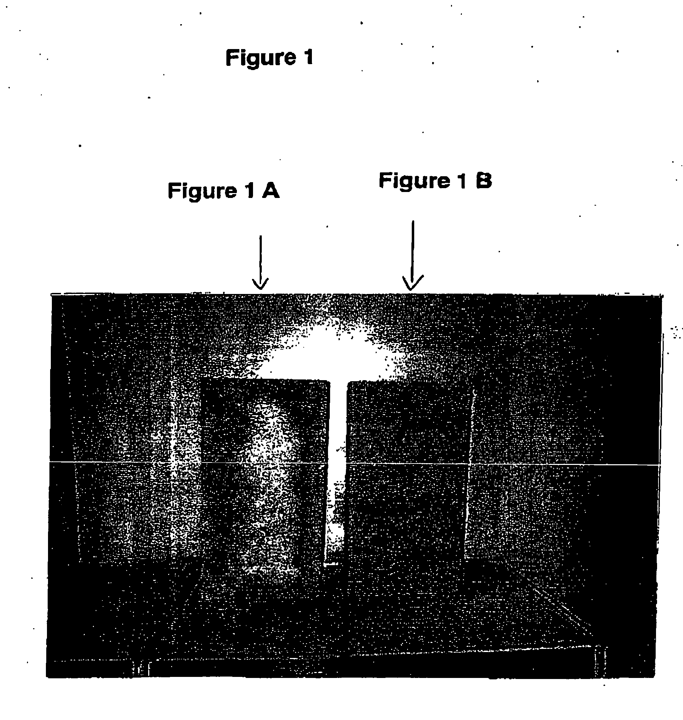

On pouvait aussi légitimement craindre un temps de séchage à coeur trop long. Cf. figure 1A annexée, qui montre que cette crainte était pleinement justifiée.

L'invention est parvenue à vaincre ces préjugés et à résoudre les importants problèmes antérieurs grâce à une formulation spéciale qui intègre des caractéristiques spéciales et innovantes de porosité et capillarité. On avait déjà résolu, dans l'art antérieur, certains des nombreux problèmes posés, comme la prise en masse, mais jamais dans le cadre de l'emploi du composant chanvre, qui représente une approche fonctionnelle totalement innovante, comme indiqué ci-dessous.

### Description détaillée de l'invention :

L'invention concerne donc de nouvelles formulations pour bétons et mortiers « de chanvre », c'est-à-dire comportant au moins un « composant » (au sens large ci-dessus) du chanvre, et / ou du lin, et / ou de la paille de céréale, comme la cosse d'avoine ou la cosse de riz, et / ou de manière générale toute matière hydrophile comparable, y compris éventuellement synthétique individuellement ou en mélange(s), ci après par simplicité, y compris dans les revendications, « de chanvre ».

L'invention concerne donc de nouvelles formulations pour bétons et mortiers « de chanvre », c'est-à-dlre comportant au moins un composant du chanvre tel que précisé ci-dessus, et les composants techniquement équivalents, qui comportent les ingrédients classiques des mortiers et bétons, sauf en ce que le liant est constitué, en totalité ou en partie, de chaux aérienne éventuellement en combinaisons diverses de types et de formes de chaux comme indiqué ci-dessus, et en ce quelles comportent de plus
a) au moins un adjuvant de formation de pores et capillaires très fins
   et
b) au moins un adjuvant d'hydrophobation matricielle.

Par « hydrophobation matricielle », on entend ici que la masse qui enrobe les fibres et particules, etc... de chanvre, est soumise à l'action hydrophobe de l'adjuvant.

On notera que le chanvre est lui aussi soumis à cette action, mais sans que cela ait un impact car le chanvre reprend de l'eau et n'est pas hydrophobé tant qu'il contient de l'eau. Par contre, après élimination de l'eau contenue dans le chanvre, l'action hydrophobante joue et le chanvre ne reprend plus d'eau, par exemple il ne reprend ni humidité ni eau de pluie, etc...., ce qui est l'un des avantages majeurs de l'invention.

Par « de formation de pores et capillaires très fins »*,* on désigne ici la formation d'un ensemble très complexe, dont la structure peut varier d'une formulation à une autre, mais qui comporte des capillaires tubulaires ouverts et/ou fermés, ainsi que des micro-bulles ou micro-espaces fermes et / ou micro-cavernes fermées, entre autres des tubes fermés, en disposition et en proportlon et répartition telles que le béton ou mortier final présente des caractéristiques homogènes ou sensiblement homogènes, et ne présente plus de défauts de prise ou de séchage, ou de propriétés aléatoires, c'est-à-dire en disposition et en proportion et répartition telles que l'eau matricielle peut être évacuée vers la surface lors de la prise puis du séchage tandis que, après séchage, l'eau externe (pluie) n'est pas capable de pénétrer ce réseau de capillaires.

On désignera cet ensemble complexe, dans ce qui suit y compris les revendications, par « système microcapillaire », dans un souci de simplicité, de lecture.

L'homme de métier, qui connaît bien les problèmes de prise et de séchage des bétons et mortiers hydrauliques, et les caractéristiques qu'il doit obtenir pour formuler un « bon » béton ou mortier, et qui connaît par ailleurs également les difficultés et inconvénients des mortiers et bétons de chanvre, n'aura aucune difficulté à régler le système micro-capillaire de l'invention, notamment en fonction du % de chaux aérienne, au vu de la description et des exemples qui vont suivre, et en se référant à sa connaissance générale personnelle, et au besoin à quelques essais de routine, pour une adaptation à l'application précise envisagée.

Selon l'invention, l'adjuvant de formation du système micro-capillaire comprend un ou des colloïdes végétaux et / ou minéraux.

Selon encore un mode de réalisation préféré, l'adjuvant de formation du système micro-capillaire est adapté pour conduire à une capillarité de l'ordre de 5 à 15 Angtröms, de préférence de 8 à 10 Angströms.

A titre comparatif, le chanvre ou la lin présente une capillarité qui est environ de 3 à 5 fois supérieure, et un liant hydraulique donne une capillarité de l'ordre de 10 à 20 fois supérieure.

Selon encore un mode de réalisation préféré, ledit adjuvant de formation du système micro-capillaire est adapté pour que ledit système microcapillaire comporte des tubes et/ou volumes et/ou espaces et/ou micro bulles et/ou micro cavernes fermé(e)s, notamment des tubes fermés.

Sans vouloir être lié par une quelconque théorie, le Demandeur considère que de tels espaces, notamment des tubes, fermés sont capables (en combinaison avec éventuellement des micro-capillaires ouverts) d'extraire l'eau contenue dans le chanvre et de lui permettre de migrer vers la surface sous forme, peu à peu, d'eau liquide puis d'eau vapeur, qui finalement diffuse vers l'extérieur.

Selon encore un mode de réalisation préféré, non limitatif, les colloïdes sont choisis parmi les colloïdes végétaux comme les alginates et /ou les polysaccharides et tous dérivés d'amidons naturels ou synthétiques et/ou les carraghénates.

On citera notamment l'hydroxypropyle guar (famille des polysaccharides) qui a donné les meilleurs résultats.

On a obtenu également de bons résultats avec les carraghénates (qui sont des produits analogues aux alginates) et l'alginate de calcium.

Par contre, les alginates de sodium et magnésium ont tendance à précipiter et ne sont pas recommandés.

D'autres adjuvants de formation du système micro-capillaire seront choisis parmi les suivants:
- le galactomannane étherifié, et
- les dérivas étherifiés des guars
et leurs mélanges.

Selon un mode de réalisation préféré, ledit adjuvant d'hydrophobation comporte au moins un agent hydrophobant et un agent surfactant ou tensio-actif.

Sans vouloir être lié par une Quelconque théorie, le Demandeur considère que le surfactant apporte une structure de « filet » ou de « maillage » qui contribue fortement à l'homogénéité du Produit final et de ses propriétés.

Selon une variante de réalisation, on utilisera un surfactant pour milieu neutre ou basique et / ou un surfactant pour milieu acide, et/ou leurs mélanges appropriés, en fonction de l'évolution prévisible du pH (que tout homme de métier connaît et sait apprécier).

Selon un mode de réalisation préféré, non limitatif, le ou les surfactants seront choisis parmi les polysulfonates de calcium, de sodium, ou de magnésium, et en particulier les lignosulfonates.

Selon encore un mode de réalisation préféré, non limitatif, d'autres surfactant(s) seront choisis parmi les suivants :
- sulfates sodiques.

Selon un mode de réalisation préféré, les agents hydrophobants sont de préférence choisis parmi les savons métalliques, les maléates, oléates, stéarates, et analogues, d'aluminium, de magnésium, de sodium, de lithium et sels analogues, et/ou les siliconates de sodium et leurs mélanges.

Selon un mode de réalisation préféré, non limitatif, le ou les agents hydrophobants seront choisis parmi les suivants :
- oléates de sodium.

Selon l'invention, les adjuvants sont employés dans les proportions suivantes:
a) adjuvant de formation du système micro-capillaire:
   de 0,01 à 2% par rapport à la masse totale du liant
b) adjuvant d'hydrophobation :
   de 0,1 à 1% par rapport à la masse totale du liant,
   le surfactant étant employé dans des proportions
   de 0,002 à 0,2 % par rapport à la masse totale du liant

On obtient ainsi un nouveau produit industriel, caractérisé en ce qu'il consiste en mortiers et bétons de composant de chanvre à liant comportant de la chaux aérienne, comportant
a) au moins un adjuvant de formation de pores et capillaires très fins tel que défini ci-dessus
   et
b) au moins un adjuvant d'hydrophobation tel que défini ci-dessus, et
dont la prise, les caractéristiques mécaniques et le séchage ne sont pas aléatoires.

L'invention concerne également un produit industriel nouveau du type mortier et bétons de composant de chanvre à liant comportant de la chaux aérienne, caractérisé en ce que il comporte dans sa masse un système microcapillaire qui comporte lui-même des tubes et/ou volumes et/ou espaces et/ou micro bulles et/ou micro cavernes fermé(e)s, notamment des tubes fermés, capables, notamment les tubes fermés (en combinaison avec éventuellement des micro-capillaires ouverts) d'extraire l'eau absorbée au préalable et contenue dans le chanvre et de lui permettre de migrer vers la surface sous forme, peu à peu, d'eau liquide puis d'eau vapeur, qui finalement diffuse vers l'extérieur, jusqu'à séchage.

Ce produit est également caractérisé en ce que sa matrice hydrophobe rend hydrophobes les fibres sèches de composant de chanvre, empêchant ainsi la reprise d'eau par le composant de chanvre.

Selon une autre variante, ce produit est caractérisé en ce que son coefficient de conductivité thermique lambda global (ou « résiduel ») est de l'ordre de 0,08 à 0,12, de préférence autour de 0,1.

A titre de comparaison, le coefficient de conductivité thermique d'un béton ou mortier hydraulique est de l'ordre de 0.6 à 1,15, soit environ de cinq à onze fois plus élevé.

De tels produits seront tous les produits utilisée dans le BTP (Bâtiment et Travaux Publics), comme parpalngs, blocs de tailles et formes diverses, briques, et analogues bien connus de l'homme de métier, ci-après par simplicité « parpaings», ainsi que des plaques, enduits, revêtements de murs, sols, plafond, etc..., et analogues bien connus de l'homme de métier.

D'autres caractéristiques et avantages de l'invention seront mieux compris à la lecture de la description qui va suivre, et en se référant au dessin annexé sur lequel :
- la figure 1 , qui se compose des figures 1A (gauche) et 18 (droite) représente une photographie de deux échantillons (20 X 30 X 60 cm) de béton de chanvre :
   - sur la figure gauche (1A) : béton hors invention (essai comparatif) réalisé avec un mélange de plâtre et de chaux aérienne (zone blanche de séchage trop long, et développement de moisissures)
   - sur la figure droite (1 B) : béton réalisé avec un mélange selon l'invention
- la figure 2 représente une photographie au microscope électronique à balayage d'un mortier de chaux sur un granulat de chanvre ( x 1000). On remarque bien la liaison entre le chanvre (A) et la chaux (B). Les grains de chaux viennent se loger jusque dans l'intérieur des canaux fibreux de la plante.
- la figure 3 représente une photographie au microscope électronique à balayage montrant des bulles et micro bulles d'air et des orifices de canaux tubulaires dans la pâte de chaux ( x 111). La porosité de la pâte de chaux est constituée par des bulles d'air et des canaux tubulaires qui se sont formés après l'évaporation de l'eau de gâchage.
- la figure 4 représente une photographie au microscope électronique à balayage montrant un réseau de bulles d'air et de canaux tubulaires ( x 17).

On voit parfaitement l'enrobage complet réalisé selon l'invention, amalgame de tubes, tubes fermés (dont certains visibles car tranchés lors de la coupe), espaces ou volumes, capillaires, et les copeaux de chanvre.
- la figure 5 représente une structure comparative de chanvre SANS la composante chaux.

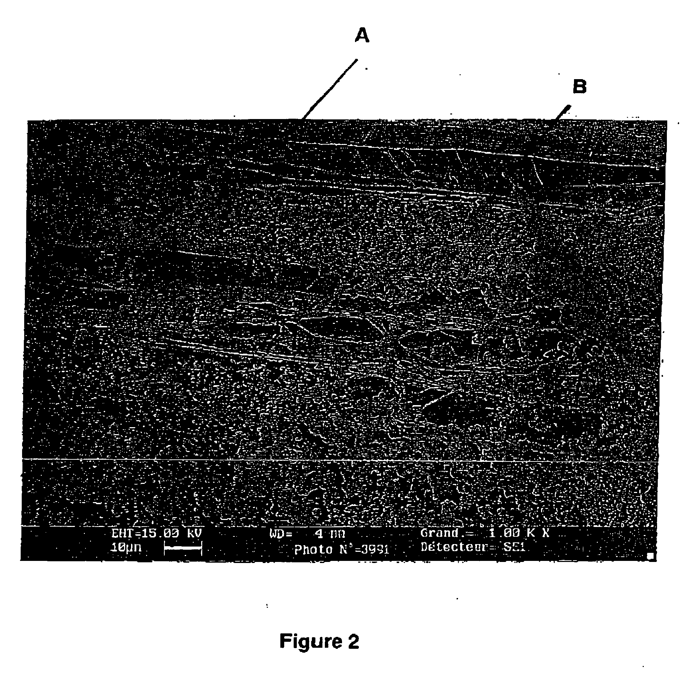

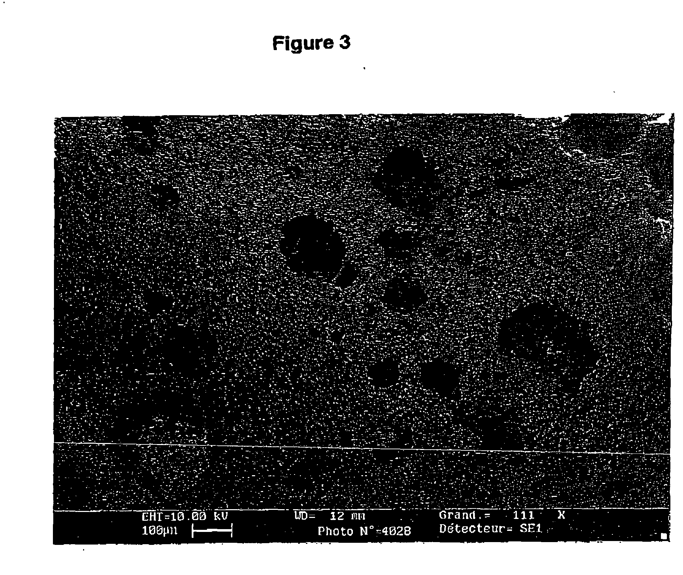

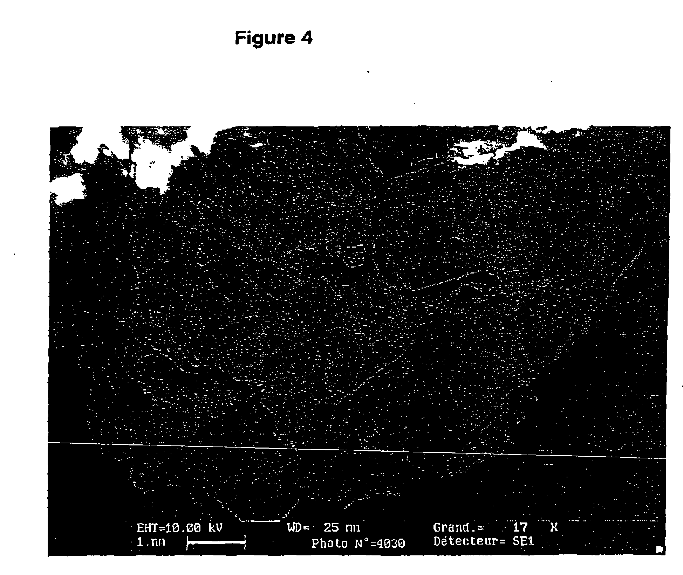

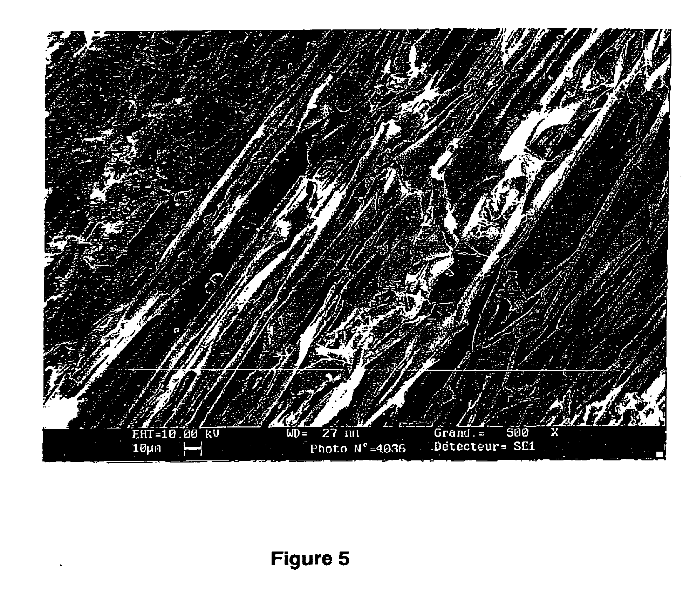

L'étude microscopique (figures 2 à 5) permet de mettre en évidence la présence selon l'invention d'un important réseau capillaire composé de bulles d'air et de canaux tubulaires.

L'invention concerne les formulations pour bétons et mortiers « de chanvre » à liant comportant de la chaux, ainsi que les nouveaux produits industriels consistant en ces mortiers et bétons, ainsi que l'emploi comme adjuvants pour mortiers et bétons « de chanvre» de l'adjuvant de formation du système micro-capillaire et/ou de l'adjuvant d'hydrophobation, ainsi que les produits fabriqués à l'aide de ces mortiers et bétons ou formulations, ou à l'aide de l'adjuvant de formation du système micro-capillaire et/ou de l'adjuvant d'hydrophobation, comme des briques, blocs, parpaings, éléments divers de « chanvre», ainsi que les produits pour bâtiment et travaux publics, ou constructions individuelles, fabriqués à l'aide de ces mortiers ou bétons, adjuvants ou produits, comme des murs, dalles, chappes, revêtements et enduits de sols, plafonds, murs, cloisons, et structures analogues.

## Revendications

1. Formulations pour bétons et mortiers « de chanvre », du type qui comportent les ingrédients classiques des mortiers et bétons, dont un liant, **caractérisées en ce qu'**elles comportent des composants « de chanvre », **en ce que** le liant est constitué, en totalité ou en partie, de « chaux aérienne » et **en ce qu'**elles comportent de plus
a) au moins un adjuvant de formation de pores et capillaires très fins formant un ensemble de « système microcapillaire », qui comporte des capillaires tubulaires ouverts et / ou fermés, ainsi que des micro-bulles ou micro-espaces fermés et / ou micro-cavernes fermées, et des tubes fermés, en disposition et en proportion et répartition adaptées pour que l'eau matricielle puisse être évacuée vers la surface lors de la prise puis du séchage tandis que, après séchage, l'eau externe (pluie) n'est pas capable de pénétrer ce réseau de capillaires, ledit adjuvant a) de formation du système micro-capillaire comprenant un ou des colloïdes végétaux et / ou minéraux,
et
b) au moins un adjuvant d'hydrophobation matricielle,
« hydrophobation matricielle », signifiant que la masse qui enrobe les fibres et particules, granulats, de chanvre, est soumise à l'action hydrophobe de l'adjuvant, et **en ce que** les adjuvants et agents sont employés dans les proportions suivantes :
a) adjuvant de formation du système micro-capillaire :
de 0,01 à 2 % par rapport à la masse totale du liant
b) adjuvant d'hydrophobation :
de 0,1 à 1 % par rapport à la masse totale du liant.

2. Formulations selon la revendication 1 **caractérisées en ce que** l'adjuvant (a) de formation du système micro-capillaire est adapté pour conduire à une capillarité de l'ordre de 5 à 15 Angstrôms, de préférence de 8 à 10 Angströms.

3. Formulations selon la revendication 1 ou 2 **caractérisées en ce que** ledit adjuvant de formation du système micro-capillaire est adapté pour que ledit système microcapillaire comporte des tubes et/ou volumes et/ou espaces et/ou micro bulles et/ou micro cavernes fermé(e)s, notamment des tubes fermés.

4. Formulations selon l'une quelconque des revendications 2 à 3 **caractérisées en ce que** les colloïdes sont choisis parmi les colloïdes végétaux comme les alginates et /ou les polysaccharides et tous dérivés d'amidons naturels ou synthétiques et / ou les carraghénates.

5. Formulations selon la revendication 4 **caractérisées en ce que** les colloides sont de l'hydroxypropyle guar (famille des polysaccharides).

6. Formulations selon la revendication 4 **caractérisées en ce que** les colloides sont les carraghénates et l'alginate de calcium.

7. Formulations selon l'une quelconque des revendications 2 à 6 **caractérisées en ce que** des adjuvants de formation du système micro-capillaire sont choisis parmi les suivants :
- le galactomannane étherifié, et
- les dérivés étherifiés des guars
- seuls ou en mélanges.

8. Formulations selon la revendication 1 **caractérisées en ce que** ledit adjuvant d'hydrophobation b) comporte au moins un agent hydrophobant et un agent surfactant ou tensio-actif, ledit surfactant étant employé à raison de 0,002 à 0,2 % par rapport à la masse totale du liant, et **en ce que** on utilise un surfactant pour milieu neutre ou basique et / ou un surfactant pour milieu acide, et/ou leurs mélanges, et **en ce que** le ou les surfactants sont choisis parmi les polysulfonates de calcium, de sodium, ou de magésium, et les lignosulfonates, et **en ce que** les agents hydrophobants sont choisis parmi les savons métalliques, les maléates, oléates, stéarates d'aluminium, de magnésium, de sodium, de lithium, et / ou les siliconates de sodium seuls ou en mélanges

9. Formulations selon la revendication 8 **caractérisées en ce que** d'autres surfactant(s) sont choisis parmi les sulfates sodiques.

10. Formulations selon la revendication 8 **caractérisées en ce que** le ou les agents hydrophobants serons choisi parmi les oléates de sodium.

11. Nouveau produit industriel, **caractérisé en ce qu'**il consiste en mortiers et bétons de composant de chanvre à liant comportant de la chaux aérienne, **caractérisé en ce qu'**il comporte :
a) au moins un adjuvant de formation de pores et capillaires très fins dit « système microcapillaire», qui comporte des capillaires tubulaires ouverts et / ou fermés, ainsi que des micro-bulles ou micro-espaces fermés et / ou micro-cavernes fermés, et des tubes fermés, en disposition et en proportion et répartition adaptées pour que l'eau matricielle puisse être évacuée vers la surface lors de la prise puis du séchage tandis que, après séchage, l'eau externe (pluie) n'est pas capable de pénétrer ce réseau de capillaires, ledit adjuvant a) de formation du système micro-capillaire comprenant un ou des colloïdes végétaux et / ou minéraux,
et
b) au moins un adjuvant d'hydrophobation matricielle, « hydrophobation matricielle » signifiant que la masse qui enrobe les fibres et particules, granulats, de chanvre, est soumise à l'action hydrophobe de l'adjuvant,
et
**en ce que** la prise, les caractéristiques mécaniques et le séchage ne sont pas aléatoires.

12. Nouveau produit industriel selon la revendication 11 **caractérisé en ce que** il comporte dans sa masse un « système microcapillaire » qui comporte des tubes et/ou volumes et/ou espaces et/ou micro bulles et/ou micro cavernes fermé(e)s, notamment des tubes fermés, capables, notamment les tubes fermés (en combinaison avec éventuellement des micro-capillaires ouverts) d'extraire l'eau absorbée au préalable et contenue dans le chanvre et de lui permettre de migrer vers la surface sous forme, peu à peu, d'eau liquide puis d'eau vapeur, qui finalement diffuse vers l'extérieur, jusqu'à séchage.

13. Nouveau produit industriel selon la revendication 11 ou 12 **caractérisé en ce que** sa matrice hydrophobe rend hydrophobes les fibres sèches de composant de chanvre, empêchant ainsi la reprise d'eau par le composant de chanvre.

14. Nouveau produit industriel selon l'une quelconque des revendications 11 à 13 **caractérisé en ce que** son coefficient de conductivité thermique lambda global (ou « résiduel ») est de l'ordre de 0,08 à 0,12 , de préférence autour de 0,1.

15. Applications des formulations selon l'une quelconque des revendications 1 à 10 et des nouveaux produits industriels selon l'une quelconque des revendications 11 à 14, pour former des bétons et mortiers de chanvre, briques, blocs, parpaings, éléments murs, dalles, revêtements, chappes, et enduits de sols, plafonds, murs, cloisons, produits pour BTP (bâtiment et travaux publics), ou constructions individuelles.

## Claims

1. Formulations for "hemp" concretes and mortars of the type comprising the conventional ingredients of mortars and concretes, including a binder, **characterised in that** they contain "hemp" components, **in that** the binder is made up in whole or in part of "air lime", and **in that** they also comprise
(a) at least one additive for the formation of very fine pores and capillaries making up a "microcapillary system" complex, which comprises open and/or closed tubular capillaries, as well as closed microbubbles or microspaces and/or closed microcavities, and closed tubes, in an arrangement and in a proportion and distribution adapted such that the matrix water can be evacuated to the surface on setting and then drying while, after drying, external water (rain) is not capable of penetrating this network of capillaries, said additive a) for the formation of the microcapillary system comprising one or more vegetable and/or mineral colloids,
and
(b) at least one matrix water repellency additive,
"matrix water repellency" here signifying that the material covering the fibres and particles, or aggregates, of hemp is subjected to the water repellent action of the additive, and **in that** the additives and agents are employed in the following proportions:
a) additive for the formation of the microcapillary system:
0.01 to 2%, based on the total mass of the binder
b) water repellency additive:
0.1 to 1%, based on the total mass of the binder.

2. Formulations according to claim 1, **characterised in that** the additive (a) for the formation of the microcapillary system is adapted to lead to a capillarity of the order of 5 to 15 ångströms, preferably 8 to 10 ångströms.

3. Formulations according to claim 1 or 2, **characterised in that** said additive for the formation of the microcapillary system is adapted such that said microcapillary system comprises closed tubes and/or volumes and/or spaces and/or microbubbles and/or microcavities, particularly closed tubes.

4. Formulations according to either of claims 2 or 3, **characterised in that** the colloids are selected from vegetable colloids such as alginates and/or polysaccharides and any derivatives of natural or synthetic starches and/or carrageenates.

5. Formulations according to claim 4, **characterised in that** the colloids are colloids of hydroxypropyl guar (polysaccharide family).

6. Formulations according to claim 4, **characterised in that in that** the colloids are carrageenates and calcium alginate.

7. Formulations according to any one of claims 2 to 6, **characterised in that** additives for the formation of the microcapillary system are selected from among the following:
- etherified galactomannan and
- etherified derivatives of guars
- singly or in mixtures.

8. Formulations according to claim 1, **characterised in that** said water repellency additive (b) comprises at least one water repellent agent and one surfactant or surface-active agent, said surfactant being employed in a quantity of 0.002 to 0.2%, based on the total mass of the binder, and **in that** use is made of a surfactant for a neutral or basic medium and/or a surfactant for an acidic medium and/or mixtures thereof, and **in that** the surfactant or surfactants are selected from among the polysulfonates of calcium, sodium or magnesium and the lignosulfonates, and **in that** the water repellent agents are selected from among the metal soaps, the maleates, oleates and stearates of aluminium, magnesium, sodium, lithium, and/or the siliconates of sodium, singly or in mixtures.

9. Formulations according to claim 8, **characterised in that** another surfactant or other surfactants are selected from among the sodium sulfates.

10. Formulations according to claim 8, **characterised in that** the water repellent agent or agents will be selected from among the oleates of sodium.

11. A novel industrial product, **characterised in that** it consists of mortars and concretes having a hemp component with a binder comprising air lime, **characterised in that** it comprises:
(a) at least one additive for the formation of very fine pores and capillaries termed a "microcapillary system", which comprises open and/or closed tubular capillaries as well as closed microbubbles or microspaces and/or closed microcavities, and closed tubes, in an arrangement and in a proportion and distribution adapted such that the matrix water can be evacuated to the surface on setting and then drying while, after drying, external water (rain) is not capable of penetrating this network of capillaries, said additive a) for the formation of the microcapillary system comprising one or more vegetable and/or mineral colloids,
and
(b) at least one matrix water repellency additive, "matrix water repellency" here signifying that the material covering the fibres and particles, or aggregates, of hemp is subjected to the water repellent action of the additive,
and
**in that** the setting, the mechanical characteristics and the drying are not uncertain properties.

12. A novel industrial product according to claim 11, **characterised in that** it comprises in its mass a "microcapillary system" which comprises closed tubes and/or volumes and/or spaces and/or microbubbles and/or microcavities, in particular closed tubes, capable, the closed tubes in particular (optionally combined with open microcapillaries), of extracting previously absorbed water contained in the hemp and of enabling it to migrate towards the surface in the form progressively of liquid water and then of water vapour, which ultimately diffuses to the exterior up to the point of drying.

13. A novel industrial product according to claim 11 or 12, **characterised in that** its water repellent matrix renders the dry hemp component fibres water-repellent, thereby preventing reabsorption of water by the hemp component.

14. A novel industrial product according to any one of claims 11 to 13, **characterised in that** its overall (or "residual") coefficient of thermal conductivity lambda is of the order of 0.08 to 0.12, preferably about 0.1.

15. Applications of the formulations according to any one of claims 1 to 10 and of the novel industrial products according to any one of claims 11 to 14 for the formation of hemp concretes and mortars, bricks, blocks, perpends, wall elements, slabs, linings, covers, and coatings of floors, ceilings, walls, partitions, products for BTP (Construction and Public Works), or individual buildings.

## Patentansprüche

1. Rezepturen für "Hanf"-Mörtel und -Betone, von der Art, welche die klassischen Inhaltsstoffe von Mörteln und Betonen umfassen, darunter ein Binder, **dadurch gekennzeichnet, dass** sie "Hanf"-Bestandteile umfassen, dass der Binder vollständig oder teilweise aus Luftkalk gebildet ist und dass sie außerdem umfassen
a) zumindest einen sehr feinen Kapillaren- und Porenformungszusatz, welcher ein "Mikrokapillarensystem"-Ensemble ausbildet, welcher offene und/oder geschlossenen röhrenförmige Kapillaren, sowie geschlossene Mikroräume oder Mikroblasen und/oder geschlossene Mikrohohlräume und geschlossene Röhren umfasst, in geeigneter Anordnung, Proportion und Verteilung, damit Matrizen-Wasser bei der Abbindung und danach bei der Trocknung an die Oberfläche abgeleitet werden kann wohingegen nach der Trocknung das externe Wasser (Regen) nicht in das Kapillarennetz eindringen kann, wobei der Mikrokapillarsystemformungszusatz a) einen oder mehrere pflanzliche und/oder mineralische Kolloide umfasst, und
b) zumindest einen Matrix-Hydrophobierzusatz, wobei "Matrix-Hydrophobierung" bezeichnet, dass die Masse, welche die Fasern und Partikel, Granulate aus Hanf umgibt, der Hydrophobiereinwirkung des Zusatzes ausgesetzt ist, und dass die Zusätze und Wirkstoffe in folgenden Verhältnissen angewandt sind:
a) Mikrokapillarsystemformungszusatz:
von 0,01 bis 2% bezogen auf das Gesamtgewicht des Binders
b) Hydrophobierzusatz:
von 0,1 bis 1% bezogen auf das Gesamtgewicht des Binders.

2. Rezepturen gemäß Anspruch 1, **dadurch gekennzeichnet, dass** der Mikrokapillarsystemformungszusatz (a) dazu ausgelegt ist zu eine Kapillarität in der Größenordnung von 5 bis 15 Ångström, vorzugsweise von 8 bis 10 Ångström zu führen.

3. Rezepturen gemäß Anspruch 1 oder 2, **dadurch gekennzeichnet, dass** der Mikrokapillarsystemformungszusatz so ausgelegt ist, dass das Mikrokapillarsystem geschlossene Röhren und/oder Volumina und/oder Räume und/oder Mikroblasen und/oder Mikrohohlräume, insbesondere geschlossene Röhren umfasst.

4. Rezepturen nach einem der Ansprüche 2 oder 3, **dadurch gekennzeichnet, dass** die Kolloide ausgewählt sind aus pflanzlichen Kolloiden wie Alginate und/oder Polysacchariden und jeglichen Derivaten von natürlicher oder synthetischer Stärke und/oder Carraghenaten.

5. Rezepturen nach Anspruch 4, **dadurch gekennzeichnet, dass** die Kolloide Hydroxypropyl-Guar (Familie der Polysaccharide) sind.

6. Rezepturen nach Anspruch 4, **dadurch gekennzeichnet, dass** die Kolloide Kalzium Alginate und Carraghenate sind.

7. Rezepturen nach einem der Ansprüche 2 bis 6, **dadurch gekennzeichnet, dass** Mikrokapillarsystemformungszusätze aus den folgenden gewählt sind:
- veretherte Galactomannane, und
- verehterte Guar-Derivate
- allein oder in Mischungen.

8. Rezepturen nach Anspruch 1, **dadurch gekennzeichnet, dass** der Hydrophobierzusatz b) zumindest einen hydrophobierenden Wirkstoff und einen tensioakiven oder Tensid-Wirkstoff umfasst, wobei das Tensid im Verhältnis von 0,002 bis 0,2% bezüglich des Gesamtgewichtes des Binders verwendet ist und **dadurch**, dass ein Tensid für neutrale und basische Umgebung und/oder ein Tensid für saure Umgebung und/oder Mischungen davon verwendet werden, und **dadurch**, dass der oder die Tenside aus Polysulfonat-Kalzium, -Natrium oder -Magnesium und Lignosolfonaten ausgewählt sind, und dass die Hydrophobierzusätze aus metallischen Seifen, Aluminium-, Magnesium-, Natrium-, Lithium-Stearaten, Maleaten, Oleaten und/oder Natriumsilikonate alleine oder in Mischungen ausgewählt sind.

9. Rezepturen nach Anspruch 8, **dadurch gekennzeichnet, dass** weitere Tenside aus Natriumsulfaten gewählt sind.

10. Rezepturen nach Anspruch 8, **dadurch gekennzeichnet, dass** der oder die Hydrophobierwirkstoffe aus Natrium-Oleaten gewählt sind.

11. Neues industrielles Produkt, **dadurch gekennzeichnet, dass** es Mörtel und Betone mit Hanfbestandteil für einen Luftkalk umfassenden Binder umfasst, **dadurch gekennzeichnet, dass** es umfasst:
a) zumindest einen sehr feinen Kapillaren- und Porenformungszusatz, "Mikrokapillarensystem" genannt, welcher offene und/oder geschlossenen röhrenförmige Kapillaren, sowie geschlossene Mikroräume oder Mikroblasen und/oder geschlossene Mikrohohlräume und geschlossene Röhren umfasst, , in geeigneter Anordnung, Proportion und Verteilung, damit Matrizen-Wasser bei der Abbindung und danach bei der Trocknung an die Oberfläche abgeleitet werden kann wohingegen nach der Trocknung das externe Wasser (Regen) nicht in das Kapillarennetz eindringen kann, wobei der Mikrokapillarsystemformungszusatz a) einen oder mehrere pflanzliche und/oder mineralische Kolloide umfasst, und
b) zumindest einen Matrix-Hydrophobierzusatz, wobei "Matrix-Hydrophobierung" bezeichnet, dass die Masse, welche die Fasern und Partikel, Granulate aus Hanf umgibt, der Hydrophobiereinwirkung des Zusatzes ausgesetzt ist, und dass die Abbindung, die mechanischen Merkmale und die Trocknung nicht zufallsbedingt sind.

12. Neues industrielles Produkt gemäß Anspruch 11, **dadurch gekennzeichnet, dass** es in seiner Masse ein "Mikrokapillarsystem" umfasst, welches umfasst, geschlossene Röhren und/oder Volumina und/oder Räume und/oder Mikroblasen und/oder Mikrohohlräume, insbesondere geschlossene Röhren (gegebenenfalls in Kombination mit offenen Mikrokapillaren) zum Abführen von vorab absorbiertem und in dem Hanf gehaltenem Wasser und um ihm zu ermöglichen nach und nach in der Form von flüssigem Wassers bis Wasserdampf an die Oberfläche zu wandern, was schließlich nach außen diffundiert, bis zur Trocknung.

13. Neues industrielles Produkt gemäß Anspruch 11 oder 12, **dadurch gekennzeichnet, dass** seine hydrophobe Matrix die trockenen Fasern des Hanfbestandteils hydrophob macht, das Wiederaufnehmen von Wasser durch das Hanfbestandteil verhindernd.

14. Neues industrielles Produkt gemäß einem der Ansprüche 11 bis 13, **dadurch gekennzeichnet, dass** sein globaler (oder "residualer") Wärmeleitkoeffizient lambda in der Größenordnung von 0,08 bis 0,12, vorzugsweise um 0,1 ist.

15. Anwendungen der Rezepturen gemäß einem der Ansprüche 1 bis 10 und der neuen industriellen Produkte gemäß einem der Ansprüche 11 bis 14 um mittels Hanf-Mörtel und -Beton, Ziegel, Blöcke, Bausteine, Mauerelemente, Wände, Produkte für Bauwerke und Tiefbau (BTB) und individuelle Konstruktionen zu bilden.
